Europäisches Patentamt

European Patent Office

Office européen des brevets

(19)

(11) EP 0 528 769 B1

# (12) EUROPEAN PATENT SPECIFICATION

(45) Date of publication and mention
of the grant of the patent:
**28.08.1996 Bulletin 1996/35**

(51) Int Cl.6: **H05B 41/29**

(21) Application number: **92830358.5**

(22) Date of filing: **07.07.1992**

(54) **A self-pulsing circuit for operating a gas-discharge lamp, particularly for use in a motor vehicle**

Selbstschwingender Schaltkreis zum Betreiben einer Gasentladungslampe, insbesondere für die Verwendung in einem Motorfahrzeug

Circuit pulsatoire pour faire marcher une lampe luminescente à gaz en particulier pour l'utilisation dans un véhicule à moteur

(84) Designated Contracting States:
**DE ES FR GB NL SE**

(30) Priority: **12.07.1991 IT TO910549**

(43) Date of publication of application:
**24.02.1993 Bulletin 1993/08**

(73) Proprietor: **MAGNETI MARELLI S.p.A.**
**I-20145 Milano (IT)**

(72) Inventors:
• **Nepote, Andrea**
**I-10131 Torino (IT)**

• **Alotto, Giorgio**
**I-10055 Condove (Torino) (IT)**

(74) Representative: **Quinterno, Giuseppe et al**
**c/o JACOBACCI & PERANI S.p.A.**
**Corso Regio Parco, 27**
**10152 Torino (IT)**

(56) References cited:
EP-A- 0 066 754     EP-A- 0 081 884
EP-A- 0 294 605     EP-A- 0 390 699
EP-A- 0 415 490     DE-A- 2 934 942
FR-A- 2 343 392     GB-A- 2 204 751
US-A- 4 585 974

## Description

The present invention relates to a self-pulsing circuit for operating a gas-discharge lamp, particularly for use for the headlamps of a motor vehicle, e.g. as disclosed in EP-A-0 294 605.

More specifically, the invention relates to a self-pulsing circuit including:

- an inverter including two branch circuits which can be connected to a direct-current voltage supply and which include respective electronic switch means in series with respective primary windings, the primary windings of the branch circuits being coupled inductively to the same secondary winding which is connected to the lamp,

- an impedance which is variable in dependence on frequency and is connected in series with the lamp, and

- control circuitry for making the electronic switch means conductive alternately so that an alternating voltage is developed at the terminals of the secondary winding, the control circuitry having a control input for receiving a control signal for varying the frequency of the alternating voltage so as correspondingly to vary the impedance and consequently to vary the current flowing through the lamp.

In a known self-pulsing circuit of the type indicated above, the inverter is of the type which has an oscillator with a transformer, the core of which can be saturated. The transformer includes a winding which is connected in series with the lamp and is coupled inductively to two further windings connected to the terminals which control the conduction of the electronic switches in the two branch circuits of the inverter. Each electronic switch includes a plurality of bipolar transistors.

The known self-pulsing circuit mentioned above has some disadvantages. In the first place, a transformer with a core which can be saturated is an expensive, delicate and problematical component. In fact, it is difficult to mass-produce these components with uniform and constant electrical and magnetic characteristics.

A further disadvantage of the known self-pulsing circuit lies in the use of bipolar transistors. In fact, each of the two branch circuits of the inverter requires a plurality of these transistors since the transistors have intrinsic limitations as regards the maximum current which can be conducted. Moreover, the transistors also create problems from the point of view of power dissipation, particularly during switching.

The object of the present invention is to provide a self-pulsing circuit of the type indicated above which prevents the problems of the devices produced up to now.

According to the invention, this object is achieved by a self-pulsing circuit of the aforesaid type, the main characteristic of which lies in the fact that a current-sensing resistor is connected in series with the lamp, and in that the control circuitry is connected to the resistor and includes:

- signal-processing circuitry connected to the terminals of the resistor for outputting first and second square-wave signals which are respectively in phase with and in opposition to the voltage signal developed at the terminals of the resistor,

- integrator circuitry for supplying first and second ramp signals which are in phase with the first and second square-wave signals,

- comparator and processing circuitry for comparing the first and second ramp signals with a reference level which is variable in dependence on the control signal, and for generating first and second drive signals which can make the electronic switch means of the first and second branch circuits of the inverter conductive respectively from the start of each ramp of the first and second ramp signals until each ramp reaches the reference level or until the ramp ends if the ramp does not reach the reference level.

Further characteristics and advantages of the invention will become clear from the detailed description which follows with reference to the appended drawings provided purely by way of non-limiting example, in which:

Figure 1 is a circuit diagram of a self-pulsing circuit according to the invention, shown partially in block form,

Figure 2 is a circuit diagram showing the internal structure of a control circuit included in the self-pulsing circuit of Figure 1,

Figure 3 is a circuit diagram which shows the detailed structure of an embodiment of a signal-processing circuit included in the control circuit shown in Figure 2,

Figure 4 is a circuit diagram showing, partially in block form, an embodiment of a triangular or ramp signal-generating circuit included in the control circuit of Figure 2,

Figure 5 is a circuit diagram showing an embodiment of a comparator circuit included in the control circuit of Figure 2,

Figure 6 is a circuit diagram showing an embodiment of a logic circuit included in the control circuit of Figure 2, and

Figure 7 shows, by way of example, the waveforms of twelve signals developed in the circuit according to the invention in operation.

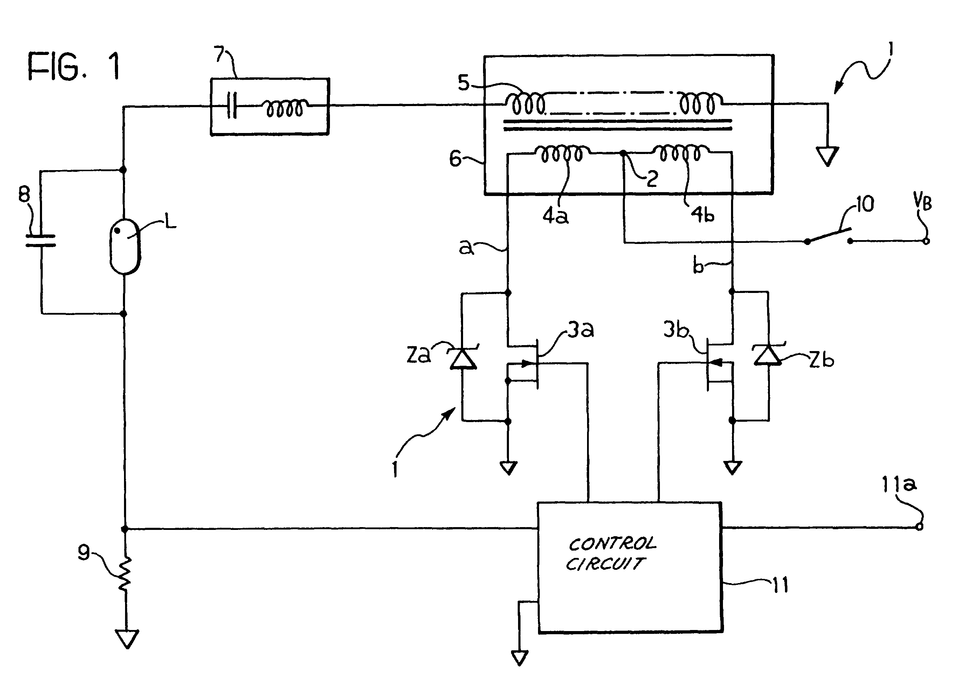

In Figure 1, a gas-discharge lamp usable in a motor-vehicle front headlamp is indicated L. The lamp is associated with a self-pulsing operating circuit which includes an inverter, generally indicated 1. The inverter has two branch circuits $a$ and $b$ between a terminal 2 and earth. The branch circuits include respective MOSFET transistors 3a, 3b with associated recirculating Zener diodes Za and Zb. Two primary windings 4a and 4b are connected in series with the drain-source paths of the transistors 3a, 3b in the two branch circuits. These windings are coupled inductively to the same secondary winding 5 with which they form a transformer, indicated 6. The secondary winding 5 is connected between earth and an L-C resonant impedance 7 connected in series with the lamp L. A capacitor 8 is connected in parallel with the lamp L.

A resistor 9, which acts as a current sensor, is connected between the lamp L and earth.

With reference again to the inverter 1, the terminal 2 to which the primary windings 4a and 4b are connected can be connected to a direct-current voltage supply $V_b$ (for example, the battery of the motor vehicle) by means of a control switch 10.

The gate terminals of the transistors 3a, 3b are connected to corresponding outputs of an electronic control circuit, generally indicted 11 in Figure 1. This circuit has an input 11a for receiving an external control signal indicative of the current which is to be made to flow through the lamp L. For example, the current may be of a greater intensity during the stages immediately after the lamp has been switched on, to enable it to warm up quickly.

As will become clearer from the following, when the switch 10 is closed, the inverter 1 is connected to the direct-current voltage supply $V_b$. The control circuit 11 then makes the transistors 3a and 3b conductive alternately and an alternating voltage is consequently developed at the terminals of the secondary winding 5 of the transformer 6. This voltage causes an alternating current to flow through the impedance 7, the lamp L and the resistor 9. The control circuit 11 determines the frequency of the alternating current in dependence on the signal applied to its control input 11a.

Variations in the frequency of the alternating voltage produced in the secondary winding 5 cause variations in the impedance of the resonant circuit 7. Thus, the alternating current flowing through the lamp and through the resistor 9 is varied correspondingly.

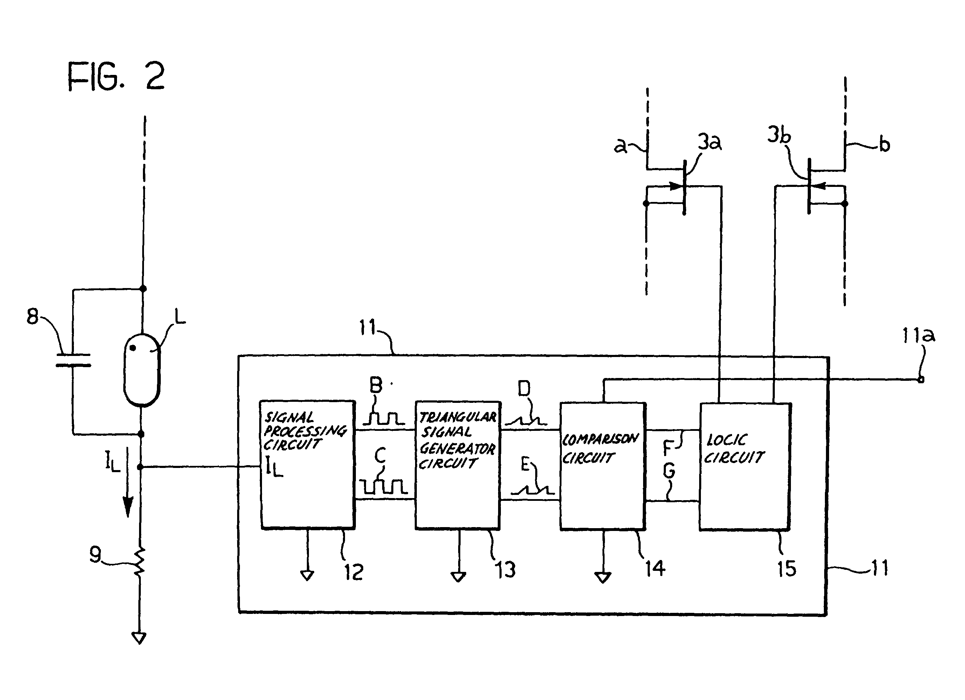

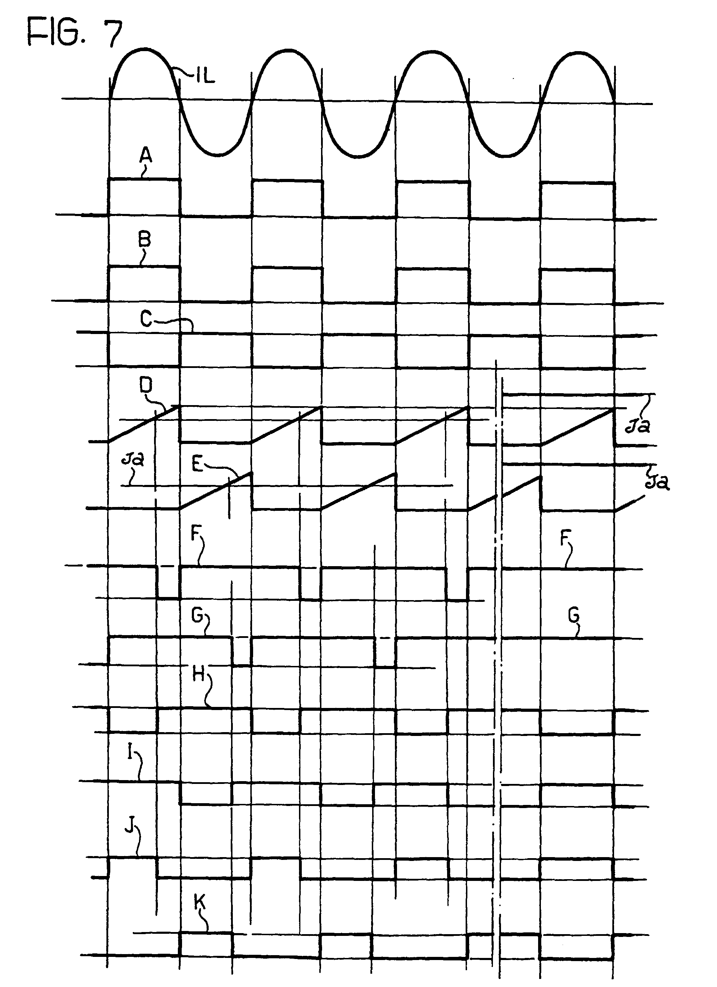

In Figures 2 and 7, the current flowing in the resistor 9 has been indicated $I_L$. This current is substantially equal to the current flowing through the lamp L. The control circuit 11 includes a circuit, indicated 12, for processing the signal $I_L$. As will become clearer from the following, the circuit 12 is arranged to output two square-wave signals B and C which have the same frequency as the signal $I_L$ but are in phase therewith and in opposition thereto, respectively.

The signals B and C are applied to the inputs of an integrator or generator circuit, generally indicated 13 in Figure 2, for generating triangular signals. This circuit outputs two ramp signals, indicated D and E in Figures 2 and 7. In practice, the ramps of the triangular signals D and E correspond respectively to the positive pulses of the signals B and C.

The outputs of the circuit 13 are connected to corresponding inputs of a comparator circuit 14 which compares the signals D and E with a reference level $s_a$ which varies in dependence on the external control signal applied to the input 11a of the control circuit 11.

The comparator circuit 14 outputs two signals F and G (Figure 7) which are applied to the inputs of a logic circuit 15 which processes them in order to output two signals J and K which are applied to the gates of the transistors 3a and 3b in order to control their conduction.

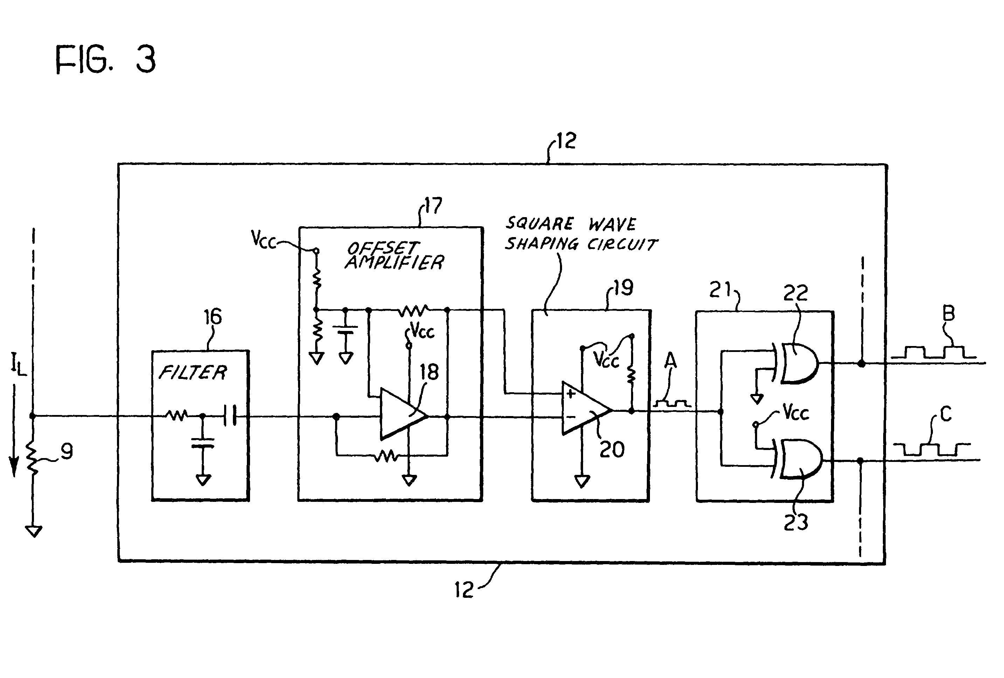

Figure 3 shows an embodiment of the circuit 12 for processing the signal developed at the terminals of the resistor 9. In this embodiment, the circuit 12 includes an R-C input filter 16 connected to an amplifier circuit 17, formed with the use of an operational amplifier 18, for amplifying the signal received and shifting its level (by introducing an offset) so as to make it unidirectional, for example, completely positive.

The amplifier circuit 17 is connected to a squaring circuit 19 formed, in known manner, with the use of a comparator 20. In operation, a square-wave signal, indicated A in Figures 3 and 7, which has the same frequency as the signal $I_L$ and is in phase therewith, is therefore available at the output of the circuit 19.

The output of the squaring circuit is connected to the input of a logic circuit 21 which simply includes two EXOR gates 22 and 23. One input of the EXOR gate 22 is connected to the output of the squaring circuit 19 and its other input is connected to earth.

One input of the EXOR gate 23 is connected to the output of the squaring circuit 19 and its other input is connected to a supply of a direct-current voltage $V_{cc}$ the value of which corresponds to a "high" logic level.

The EXOR gates 22 and 23 therefore output the signals indicated B and C in Figures 3 and 7. The signal B has the same frequency as the signal A, and is in phase therewith, but the signal C is in opposition to the signal B.

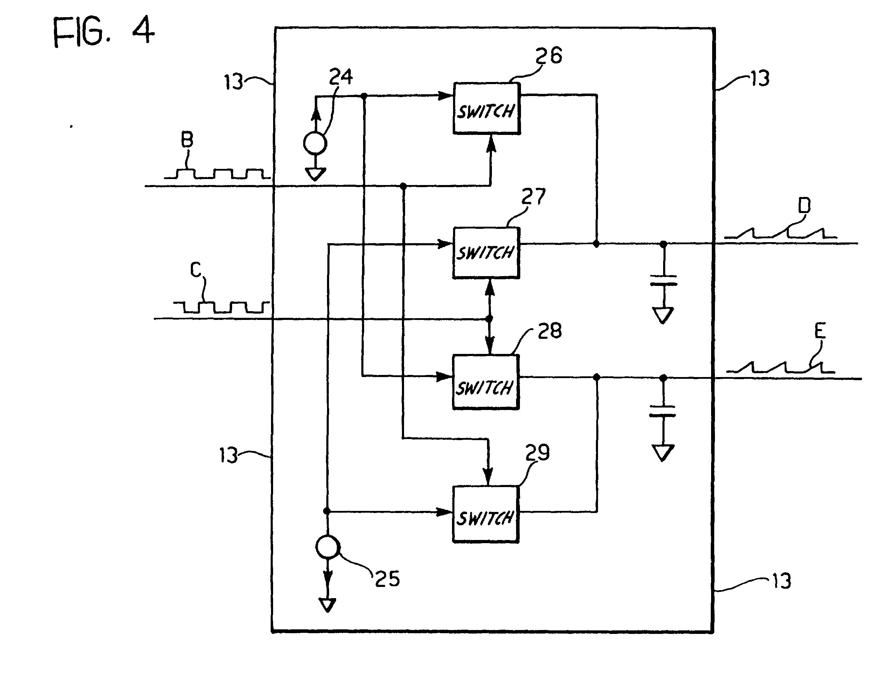

The embodiment of the circuit 13 for generating triangular or ramp signals illustrated in Figure 4 includes two current generators 24 and 25. The current generators can be connected to two capacitors C1 and C2 by means of four switches 26 to 29.

For the reasons which will become clear from the following, the current generator 24 is defined as the charging generator and, in particular, can be connected to the capacitor C1 by means of the switch 26 and to the capacitor C2 by means of the switch 28.

The current generator 25, which is defined below as the discharging current generator, can be connected to the capacitor C1 by means of the switch 27 and to the capacitor C2 by means of the switch 29.

The switches 26 and 29 are controlled by the signal B and the switches 27 and 28 are controlled by the signal C.

When the signal B is at the "high" level, the current generator 24 is thus connected to the capacitor C1. The current supplied by this generator charges the capacitor C1 and the voltage at its terminals increases linearly with the slope shown by the waveform of the signal D in Figure 7. At the same time, the current generator 25 is connected to the capacitor C2 and discharges that capacitor. Conveniently, the generator 25 is arranged to generate a current much greater than the charging current so that the discharge takes place almost instantaneously and in any case much faster than the charging.

When the signal B is at a "low" level, the switches 26 and 29 are open and the switches 27 and 28 are closed. At this stage, the capacitor C2 is therefore charged and the capacitor C1 is rapidly discharged.

Finally, the circuit 13 outputs two voltage signals D and E with the alternating ramp waveforms shown in Figure 7. As can be seen in this drawing, the start of each ramp of the signal D or E coincides with a zero-crossing of the current $I_L$. Moreover, each ramp of the signals D and E also ends in correspondence with the subsequent zero-crossing of the signal $I_L$.

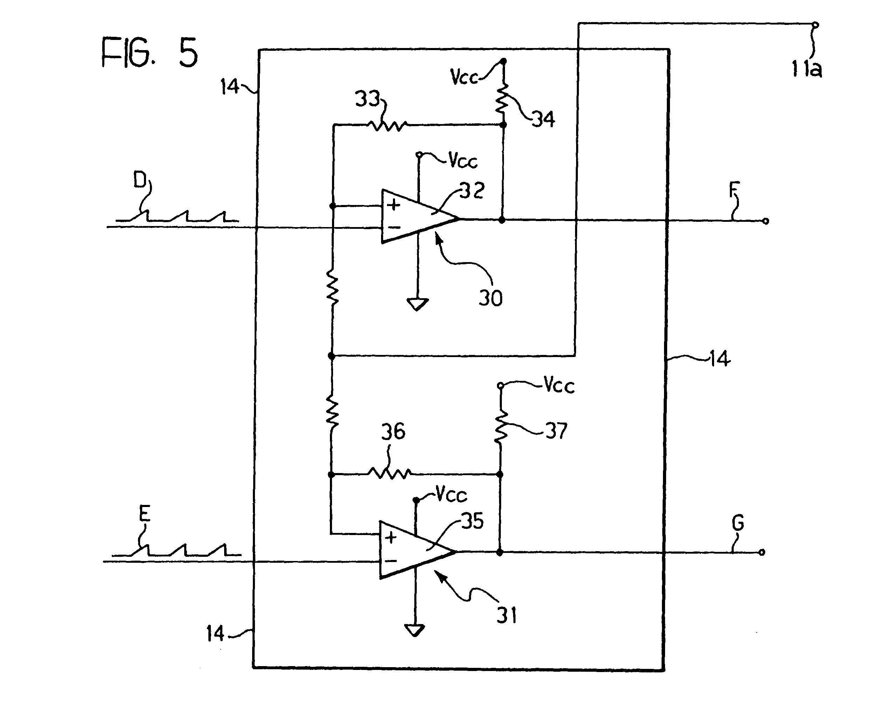

The signals D and E are applied to the inputs of the comparator circuit 14. As can be seen in Figure 5, this includes two inverting threshold comparators generally indicated 30 and 31. The comparator stage 30 includes a comparator 32, a resistor 33 between the non-inverting input and the output of the comparator, and a resistor 34 between a direct-current voltage supply $V_{cc}$ and the output of the comparator.

The threshold comparator stage 31 includes a comparator 35, a resistor 36 between the non-inverting input and the output of the comparator, and a resistor 37 between the supply $V_{cc}$ and the output of the comparator.

The control input terminal 11a of the control circuit 11 (Figure 1) is connected to the non-inverting inputs of the comparators 32 and 35 of the comparator circuit 14 (Figure 5). The threshold level associated with the threshold comparators 30 and 31 can be altered by the application of an external voltage signal to the control input 11a. In Figure 7, the threshold level has been indicated $s_a$. In operation, signals with the waveforms indicated F and G in Figures 5 and 7 are therefore present at the outputs of the threshold comparators 30 and 31; these signals remain at the "high" level as long as the signals D and E remain below the threshold levels associated respectively therewith.

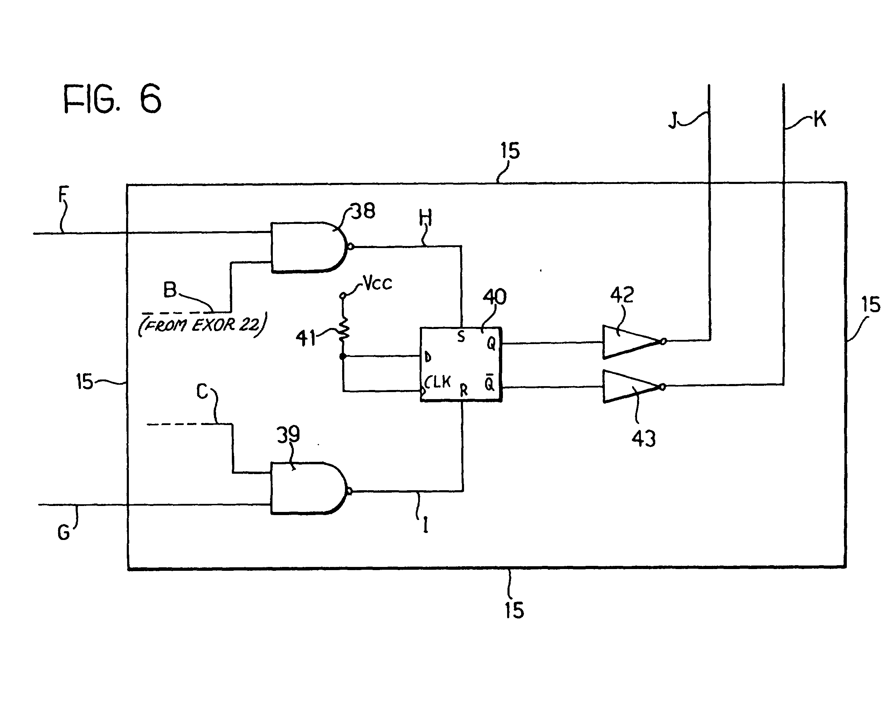

The signals F and G are applied to the logic circuit 15, an embodiment of which is shown in Figure 6.

In this embodiment, the circuit 15 includes two NAND logic gates indicated 38 and 39. One input of the NAND gate 38 receives the signal F and its other input receives the signal B from the EXOR circuit 22.

One input of the NAND gate 39 receives the signal G and its other input receives the signal C from the EX-OR gate 23.

Respective signals H and I, the waveforms of which are shown by way of example in Figure 7, are thus present at the outputs of the NAND gates 38 and 39.

The outputs of the NAND gates 38 and 39 are connected to the set (S) and reset (R) inputs of a bistable circuit 40. Conveniently, this is a D-type flip-flop circuit in the set/reset configuration and its data input (D) and its clock input (CK) are connected to the supply $V_{cc}$ through a resistor 41. The bistable circuit 40 outputs two signals, the shapes of which correspond substantially to those of the signals H and I. This circuit ensures, however, that the signals are switched in the correct sequence.

The outputs Q and $\overline{Q}$ of the bistable circuit 40 are connected to the gates of the transistors 3a and 3b through respective logic inverters 42 and 43.

The inverters thus output drive signals J and K having the waveforms shown in Figure 7.

The signals J and K make the transistors 3a and 3b conductive alternately, as already stated above with reference to Figure 1.

If, in operation, the current flowing through the lamp L has to be increased, the external control signal applied to the input 11a of the control circuit 11 raises the threshold level $s_a$ associated with the threshold comparators 30 and 31. The limit to which this threshold level can be brought is above the greatest amplitude which the ramp signals D and E can reach, as shown in the right-hand portions of the graphs of Figure 7. In this case, the ramp signals do not reach the threshold level and the signals F and G remain at the "high" level. The signals H and I, and consequently also the signals J and K, are thus precisely in opposition.

It can thus be seen that, in this situation, each transistor 3a, 3b of the inverter is made conductive as the current $I_L$ crosses zero and is kept conductive until the next time that current crosses zero.

Naturally, the principle of the invention remaining the same, the forms of embodiment and details of construction may be varied widely with respect to those described and illustrated purely by way of non-limiting example, without thereby departing from the scope of the present invention.

In particular, the circuit according to the invention may be formed at least partially with the use of integrated digital or microprocessor components. Digital counters and comparators may be used instead of analog integrator and comparator circuits.

**Claims**

1. A self-pulsing circuit for operating a gas-discharge lamp (L), particularly for use in a motor vehicle, including:

- an inverter (1) including two branch circuits (a, b) which can be connected to a direct-current voltage supply ($V_b$) and which include respective electronic switch means (3a, 3b) in series with respective primary windings (4a, 4b), the primary windings (4a, 4b) of the branch circuits (a, b) being coupled inductively to the same secondary winding (5) which is connected to the lamp (L),

- an impedance (7) which is variable in dependence on frequency and is connected in series with the lamp, and

- control circuitry (11) for making the electronic switch means (3a, 3b) conductive alternately so that an alternating voltage is developed at the terminals of the secondary winding (5), the control circuitry (11) having a control input (11a) for receiving a control signal for varying the frequency of the alternating voltage so as correspondingly to vary the impedance (7) and consequently to vary the current ($I_L$) flowing through the lamp (L),

characterised in that a current-sensing resistor (9) is connected in series with the lamp (L), and in that the control circuitry (11) is connected to the resistor (9) and includes:

- signal-processing circuitry (12) connected to the terminals of the resistor (9) for outputting first and second square-wave signals (B, C) which are respectively in phase with and in opposition to the signal developed at the terminals of the resistor (9), respectively,

- integrator circuitry (13) for supplying first and second ramp signals (D, E) in phase with the first and second square-wave signals (B, C),

- comparator and processing circuitry (14, 15) for comparing the first and second ramp signals (D, E) with a reference level ($s_a$) which is variable in dependence on the control signal, and for generating first and second drive signals (J, K) which can make the electronic switch means (3a, 3b) of the first and second branch circuits (a, b) conductive respectively from the start of each ramp of the first and second ramp signals (D, E) until each ramp reaches the reference level ($s_a$) or until the ramp ends if the ramp does not reach the reference level ($s_a$).

2. A self-pulsing circuit according to Claim 1, characterised in that the signal-processing circuitry (12) includes:

- an offset circuit (17) for shifting the level of the voltage signal developed at the terminals of the resistor (9) and making it unidirectional,

- a squaring circuit (19) connected to the output of the offset circuit (17) for supplying a square-wave signal (A) of the same frequency and in phase with the signal supplied by the offset circuit (17),

- a first EXOR logic circuit (22) with a first input which is kept at a "low" level in operation and a second input which is connected to the output of the squaring circuit (19), and

- a second EXOR logic circuit (23) with a first input which is kept at a "high" level in operation and a second input which is connected to the output of the squaring circuit (19).

3. A self-pulsing circuit according to Claim 1 or Claim 2, characterised in that the integrator circuitry (13) includes:

- capacitive means (C1, C2),

- means (24) for generating a charging current and means (25) for generating a discharging current, the means (24, 25) being connectible selectively to the capacitive means (C1, C2) and the discharging current being higher than the charging current, and

- switching means (26 - 29) which are interposed between the capacitive means (C1, C2) and the charging and discharging current-generating means (24, 25) and are driven by the first and second square-wave signals (B, C).

4. A self-pulsing circuit according to Claim 3, characterised in that the capacitive means include first and second capacitors (C1, C2) which are connected alternately to the means (24) for generating the charging current and to the means (25) for generating the discharging current.

5. A self-pulsing circuit according to Claims 2 to 4, characterised in that the comparator and processing means (14, 15) include:

- first and second threshold comparators (30, 31) for comparing the voltages at the terminals of the first and second capacitors (C1, C2) with a reference voltage ($s_a$) which is variable in dependence on the control signal,

- a first NAND circuit (38) with first and second inputs connected to the output of the first EXOR circuit (22) and to the output of the first threshold comparator (30), respectively, and

- a second NAND circuit (39) with first and second inputs connected to the output of the second EXOR circuit (23) and to the output of the second threshold comparator (31), respectively.

6. A self-pulsing circuit according to Claim 5, characterised in that the outputs of the NAND circuits (38, 39) are connected respectively to the set input (S) and to the reset input (R) of a bistable circuit (40), the outputs (Q, Q̄) of which are connected to the terminals which control the conduction of the electronic switch means (3a, 3b).

7. A self-pulsing circuit according to any one of the preceding claims, characterised in that the electronic switch means include two MOSFET transistors (3a, 3b).

**Patentansprüche**

1. Schaltkreis mit selbsterregten Impulsen, um eine Gasentladungslampe (L) in Betrieb zu setzen, besonders für die Verwendung in einem Kraftfahrzeug, wobei der Schaltkreis aufweist:

- einen Inverter (1), der zwei Verzweigungskreise (a, b) aufweist, die mit einer Gleichspannungsquelle ($V_b$) verbunden werden können und entsprechende elektronische Schalteinrichtungen (3a, 3b) aufweisen, die in Serie mit entsprechenden Primärwicklungen (4a, 4b) liegen, wobei die Primärwicklungen (4a, 4b) der Verzweigungskreise (a, b) induktiv mit derselben Sekundärwicklung (5) gekoppelt sind, die mit der Lampe (L) verbunden ist,

- eine Impedanz (7), die in Abhängigkeit von einer Frequenz veränderbar ist und mit der Lampe in Serie liegt, sowie

- eine Steuerstufe (11), um die elektronische Schalteinrichtung (3a, 3b) abwechselnd leitend zu machen, so daß an den Anschlüssen der Sekundärwicklung (5) eine Wechselspannung erzeugt wird, wobei die Steuerstufe (11) einen Steuereingang (11a) für den Empfang eines Steuersignals besitzt, um die Frequenz der Wechselspannung zu ändern, um die Impedanz (7) und damit jenen Strom ($I_L$) zu ändern, der durch die Lampe (L) fließt,

dadurch gekennzeichnet, daß ein Stromabtastwiderstand (9) mit der Lampe (L) in Serie liegt, und daß die Steuerstufe (11) mit dem Widerstand (9) verbunden ist und aufweist:

- eine Signalverarbeitungsstufe (12), die mit den Anschlüssen des Widerstands (9) verbunden ist, um ein erstes und zweites Rechtecksignal (B, C) abzugeben, die mit dem Spannungssignal, das an den Anschlüssen des Widerstands entwickelt wird (9), in Phase bzw. in Gegenphase liegen,

- eine Integratorstufe (13), um ein erstes und zweites Sägezahnsignal (D, E) zu liefern, die mit dem ersten und zweiten Rechtecksignal (B, C) in Phase liegen, und

- eine Vergleicher- und Verarbeitungs-Stufe (14, 15), um das erste und zweite Sägezahnsignal (D, E) mit einem Bezugspegel ($s_a$) zu vergleichen, der in Abhängigkeit vom Steuersignal veränderbar ist, und ein erstes und zweites Ansteuersignal (J, K) zu erzeugen, die die elektronische Schalteinrichtung (3a, 3b) des ersten und zweiten Verzweigungskreises (a, b) vom Beginn jedes Sägezahns des ersten und zweiten Sägezahnsignals (D, E) leitend machen können, bis jeder Sägezahn den Bezugspegel ($s_a$) erreicht, oder bis der Sägezahn endet, wenn der Sägezahn den Bezugspegel ($s_a$) nicht erreicht.

2. Schaltkreis mit selbsterregten Impulsen gemäß Anspruch 1, dadurch gekennzeichnet, daß die Signalverarbeitungsstufe (12) aufweist:

- eine Verschiebungsstufe (17), um den Pegel jenes Spannungssignals, das an den Anschlüssen des Widerstands (9) entwickelt wird, zu verschieben und es zu einem Gleichstromsignal zu machen,

- eine Rechteckformerstufe (19), die mit dem Ausgang der Verschiebungsstufe (17) verbunden ist, um ein Rechtecksignal (A) mit der gleichen Frequenz und in Phase mit jenem Signal zu liefern, das von der Verschiebungsstufe (17) geliefert wird,

- eine erste logische EXOR-Stufe (22) mit einem ersten Eingang, der im Betrieb auf einem "niedrigen" Pegel gehalten wird, und einem zweiten Eingang, der mit dem Ausgang der Rechteckformerstufe (19) verbunden ist, und

- eine zweite logische EXOR-Stufe (23) mit einem ersten Eingang, der im Betrieb auf einem "hohen" Pegel gehalten wird, und einem zweiten Eingang, der mit dem Ausgang der Rechteckformerstufe (19) verbunden ist.

3. Schaltkreis mit selbsterregten Impulsen gemäß Anspruch 1 oder 2, dadurch gekennzeichnet, daß die Integratorstufe (13) aufweist:

- eine kapazitive Einrichtung (C1, C2),
- eine Stufe (24), um einen Ladestrom zu erzeugen, sowie eine Stufe (25), um einen Entladestrom zu erzeugen, wobei die Stufen (24, 25) wahlweise mit der kapazitiven Einrichtung (C1, C2) verbunden werden können, und wobei der Entladestrom größer als der Ladestrom ist, und
- eine Schaltstufe (26-29), die zwischen der kapazitiven Einrichtung (C1 und C2) sowie der Lade- und Entladestrom-Generatorstufe (24, 25) liegt und mit dem ersten und zweiten Rechtecksignal (B, C) angesteuert wird.

4. Schaltkreis mit selbsterregten Impulsen gemäß Anspruch 3, dadurch gekennzeichnet, daß die kapazitive Einrichtung einen ersten und zweiten Kondensator (C1, C2) aufweist, die abwechselnd mit der Stufe (24) für die Erzeugung des Ladestroms und der Stufe (25) für die Erzeugung des Entladestroms verbunden werden.

5. Schaltkreis mit selbsterregten Impulsen gemäß Anspruch 2 bis 4, dadurch gekennzeichnet, daß die Vergleicher- und Verarbeitungsstufe (14, 15) aufweist:

- einen ersten und zweiten Schwellwertvergleicher (30, 31), um die Spannungen an den Anschlüssen des ersten und zweiten Kondensators (C1, C2) mit einer Bezugsspannung ($s_a$) zu vergleichen, die in Abhängigkeit vom Steuersignal veränderbar ist,
- eine erste NAND-Stufe (38) mit einem ersten und zweiten Eingang, die mit dem Ausgang der ersten EXOR-Stufe (22) bzw. dem Ausgang des ersten Schwellwertvergleichers (30) verbunden sind, und
- eine zweite NAND-Stufe (39) mit einem ersten und zweiten Eingang, die mit dem Ausgang der zweiten EXOR-Stufe (23) bzw. dem Ausgang des zweiten Schwellwertvergleichers (31) verbunden sind.

6. Schaltkreis mit selbsterregten Impulsen gemäß Anspruch (5), dadurch gekennzeichnet, daß die Ausgänge der NAND-Stufen (38, 39) mit dem Setz-Eingang (S) bzw. dem Rücksetz-Eingang (R) einer bistabilen Stufe (40) verbunden sind, deren Ausgänge (Q, $\overline{Q}$) an jenen Anschlüssen liegen, die die Leitung der elektronischen Schalteinrichtung (3a, 3b) steuern.

7. Schaltkreis mit selbsterregten Impulsen gemäß irgendeinem der bisherigen Ansprüche, dadurch gekennzeichnet, daß die elektronische Schalteinrichtung zwei MOSFET-Transistoren (3a, 3b) aufweist.

**Revendications**

1. Circuit auto-pulsé pour faire fonctionner une lampe à décharge (L), notamment pour une utilisation dans un véhicule à moteur, comprenant:

- un inverseur (1) comportant deux circuits dérivés (a, b) qui peuvent être connectés à une alimentation en tension à courant continu ($V_b$) et qui comportent des moyens de commutation électroniques respectifs (3a, 3b) en série avec des enroulements primaires respectifs (4a, 4b), les enroulements primaires (4a, 4b) des circuits dérivés (a, b) étant couplés par induction au même enroulement secondaire (5) que celui qui est connecté à la lampe (L),
- une impédance (7) qui varie en fonction de la fréquence et est connectée en série avec la lampe, et
- un circuit de commande (11) pour rendre les moyens de commutation électroniques (3a, 3b) conducteurs en alternance de façon qu'une tension alternative apparaisse aux bornes de l'enroulement secondaire (5), le circuit de commande (11) ayant une entrée de commande (11a) destinée à recevoir un signal de commande pour faire varier la fréquence de la tension alternative afin de faire varier de façon correspondante l'impédance (7), et par conséquent, de faire varier le courant ($I_L$) passant dans la lampe (L),

caractérisé en ce qu'une résistance de détection de courant (9) est connectée en série à la lampe (L), et en ce que le circuit de commande (11) est connecté à la résistance (9) et comporte:

- un circuit de traitement de signaux (12) connecté aux bornes de la résistance (9) pour fournir en sortie des premier et second signaux carrés (B, C) qui sont respectivement en phase et en opposition de phase avec le signal apparaissant aux bornes de la résistance (9),
- un circuit intégrateur (13) pour fournir des premier et second signaux en dents de scie (D, E) en phase avec les premier et second signaux carrés (B, C),
- un circuit de comparaison et de traitement (14, 15) pour comparer les premier et second signaux en dents de scie (D, E) avec un niveau de référence ($s_a$) qui peut varier en fonction du signal de commande, et pour produire des premier et second signaux d'attaque (J, K) qui peuvent respectivement rendre conducteurs les moyens de commutation électroniques (3a, 3b) des premier et second circuits dérivés (a, b) à partir du début de chaque dent de scie des premier et second signaux en dents de scie (D, E), jusqu'à ce que chaque dent de scie atteigne le niveau de référence ($s_a$) ou jusqu'à ce que la dent de scie s'interrompe si la dent de scie n'atteint pas le niveau de référence ($s_a$).

2. Circuit auto-pulsé selon la revendication 1, caractérisé en ce que le circuit de traitement de signaux (12) comporte:

- un circuit de décalage (17) pour décaler le niveau du signal de tension apparaissant aux bornes de la résistance (9) et le rendre monodirectionnel,
- un circuit de mise au carré (19) connecté à la sortie du circuit de décalage (17) pour fournir un signal carré (A) de même fréquence que le signal fourni par le circuit de décalage (17) et en phase avec celui-ci,
- un premier circuit logique OU-EX (22) ayant une première entrée qui est maintenue à un niveau "bas" en fonctionnement, et une seconde entrée qui est connectée à la sortie du circuit de mise au carré (19), et
- un second circuit logique OU-EX (23) ayant une première entrée qui est maintenue à un niveau "haut" en fonctionnement, et une seconde entrée qui est connectée à la sortie du circuit de mise au carré (19).

3. Circuit auto-pulsé selon la revendication 1 ou la revendication 2, caractérisé en ce que le circuit intégrateur (13) comporte:

- des moyens capacitifs (C1, C2),
- des moyens (24) pour produire un courant de charge et des moyens (25) pour produire un courant de décharge, les moyens (24, 25) pouvant être connectés sélectivement aux moyens capacitifs (C1, C2) et le courant de décharge étant plus élevé que le courant de charge, et
- des moyens de commutation (26-29) qui sont interposés entre les moyens capacitifs (C1, C2) et les moyens de production de courant de charge et de courant de décharge (24, 25) et qui sont attaqués par les premier et second signaux carrés (B, C).

4. Circuit auto-pulsé selon la revendication 3, caractérisé en ce que les moyens capacitifs comportent des premier et second condensateurs (C1, C2) qui sont connectés en alternance aux moyens (24) destinés à produire le courant de charge et aux moyens (25) destinés à produire le courant de décharge.

5. Circuit auto-pulsé selon les revendications 2 à 4, caractérisé en ce que les moyens de comparaison et de traitement (14, 15) comprennent:

- des premier et second comparateurs de seuil (30, 31) pour comparer les tensions aux bornes des premier et second condensateurs (C1, C2) avec une tension de référence ($s_a$) qui peut varier en fonction du signal de commande,
- un premier circuit NON-ET (38) ayant des première et seconde entrées respectivement connectées à la sortie du premier circuit OU-EX (22) et à la sortie du premier comparateur de seuil (30), et
- un second circuit NON-ET (39) ayant des première et seconde entrées respectivement connectées à la sortie du second circuit OU-EX (23) et à la sortie du second comparateur de seuil (31).

6. Circuit auto-pulsé selon la revendication 5, caractérisé en ce que les sorties des circuits NON-ET (38, 39) sont respectivement connectées à l'entrée de validation (S) et à l'entrée de réinitialisation (R) d'un circuit bistable (40), dont les sorties (Q, $\overline{Q}$) sont connectées aux bornes qui commandent la conduction des moyens de commutation électroniques (3a, 3b).

7. Circuit auto-pulsé selon l'une quelconque des revendications précédentes, caractérisé en ce que les moyens de commutation électroniques comportent deux transistors à effet de champ MOS (3a, 3b).

FIG. 1

EP 0 528 769 B1

FIG. 2

8  L

$I_L$

9

a  3a  3b  b

11

11a

| SIGNAL PROCESSING CIRCUIT | | TRIANGULAR SIGNAL GENERATOR CIRCUIT | | COMPARISON CIRCUIT | | LOGIC CIRCUIT |

$I_L$

B

C

D

E

F

G

12  13  14  15  11

FIG. 3

FIG. 4

EP 0 528 769 B1

FIG. 5

EP 0 528 769 B1

FIG. 6

FIG. 7